# EUROPÄISCHE PATENTSCHRIFT

(11) **EP 3 337 751 B1**
(45) Veröffentlichungstag und Bekanntmachung des Hinweises auf die Patenterteilung: **20.11.2024**
(21) Anmeldenummer: 16760384.4
(22) Anmeldetag: 16.08.2016
(51) Int. Cl.: G01S 13/86, G01S 17/89, B66C 15/04, B66C 15/00, B66C 15/06, G01S 17/93

(54) **VERFAHREN ZUR BAUSTELLENÜBERWACHUNG, ARBEITSMASCHINE UND SYSTEM ZUR BAUSTELLENÜBERWACHUNG**
METHOD FOR THE MONITORING OF CONSTRUCTION SITES, BUILDING MACHINE AND CONSTRUCTION SITE MONITORING SYSTEM
PROCÉDÉ POUR LA SURVEILLANCE DE SITES DE CONSTRUCTION, MACHINE DE CONSTRUCTION ET SYSTÈME DE SURVEILLANCE DU SITE DE CONSTRUCTION

(30) Priorität: 17.08.2015 DE 102015010726
(43) Veröffentlichungstag der Anmeldung: 27.06.2018
(73) Patentinhaber: Liebherr-Werk Biberach GmbH, 88400 Biberach an der Riss (DE)
(72) Erfinder: TASCH, Dominique, 88400 Biberach (DE); HARDOCK, Günther, 88400 Biberach (DE); SCHLAUCHER, Wolfgang, 88400 Biberach (DE)
(74) Vertreter: Laufhütte, Dieter
(86) Internationale Anmeldenummer: PCT/EP2016/001398
(87) Internationale Veröffentlichungsnummer: WO 2017/028951

(56) Entgegenhaltungen:
- CN-A- 102 219 158
- CN-U- 204 237 455
- DE-A1- 102013 016 118
- DE-T5- 112009 001 554
- DE-T5- 112009 002 054
- DE-T5- 112012 000 169
- JP-A- 2007 276 947
- JP-A- 2010 112 100
- JP-B2- 4 218 449
- US-A1- 2008 208 415
- US-A1- 2011 187 548
- US-A1- 2013 299 440
- US-B2- 8 346 468

## Beschreibung

Die Erfindung betrifft ein Verfahren zur Echtzeitüberwachung des aktuellen Zustands einer Baustelle mit ein oder mehreren Arbeitsmaschinen.

Stand heute werden Baustellen von sämtlichen Gewerken meist digital erstellt und geplant. Sobald jedoch die Arbeiten auf der Baustelle beginnen, wird der Einsatz digitaler Technologien verschwindend gering. Während der Durchführung der Bauarbeiten werden hauptsächlich Papierdokumente wie Zeichnungen, Aufträge, Lieferscheine sowie verbale Kommunikation verwendet. Die Überwachung und Kontrolle des Baufortschritts erfolgt also manuell durch Abgleich der verfügbaren Dokumente.

Ein wichtiger Aspekt der Baustellenüberwachung ist die Einrichtung einer Antikollisionsüberwachung, um gefährliche Kollisionen der Arbeitsmaschinen untereinander als auch mit etwaigen Objekten auf der Baustelle bzw. den Baugewerken zu vermeiden. Bisher wird eine Kollisionsüberwachung für einzelne Arbeitsmaschinen auf deren individueller Maschinensteuerung umgesetzt. Die Maschinen können oder müssen dazu ihre Betriebsbewegungen untereinander kommunizieren. Maschinen oder insbesondere Gewerke, die derartige Kommunikationsvoraussetzungen nicht erfüllen, werden von der Kollisionsüberwachung nicht erfasst. Das Dokument DE112012000169T5 offenbart ein Verfahren zur Echtzeitüberwachung des aktuellen Zustands einer Baustelle mit ein oder mehreren Arbeitsmaschinen, wobei ein an wenigstens einer Arbeitsmaschine installiertes Überwachungsmittel die Arbeitsmaschine in Echtzeit beobachtet und entsprechende Beobachtungsdaten generiert, und die generierten Beobachtungsdaten von dem Überwachungsmittel an eine Recheneinheit zur Echtzeitauswertung des aktuellen Baustellenzustandes übertragen werden.

Die bisherige Baustellenüberwachung scheint jedoch im Zeitalter zunehmender Technisierung nicht mehr angemessen. Die vorliegende Erfindung setzt sich daher die Suche nach eine geeigneten Lösung zur automatisierten Baustellenüberwachung zur Aufgabe.

Gelöst wird diese Aufgabe durch das Verfahren gemäß den Merkmalen des Anspruchs 1. Vorteilhafte Ausgestaltungen des Verfahrens sind Gegenstand der abhängigen Unteransprüche.

Erfindungsgemäß wird ein Verfahren zur Echtzeitüberwachung des aktuellen Zustands einer Baustelle mit ein oder mehreren Arbeitsmaschinen vorgeschlagen. Dazu beobachtet ein an wenigstens einer Arbeitsmaschine installiertes Überwachungsmittel die Umgebung der Arbeitsmaschine in Echtzeit und generiert entsprechende Beobachtungsdaten für die nachfolgende Bearbeitung. Diese generierten Beobachtungsdaten werden von dem Überwachungsmittel an wenigstens eine Recheneinheit zur Echtzeitauswertung des aktuellen Baustellenzustandes übertragen.

Das oder die Überwachungsmittel erfassen in Echtzeit etwaige Gebäude im Umkreis der Arbeitsmaschine. Die Erfassung und Generierung der Beobachtungsdaten kann kontinuierlich oder zyklisch oder manuell auf Benutzeranfrage hin erfolgen. Durch Beobachtung über einen bestimmten Zeitraum können die dadurch generierten Beobachtungsdaten einen Rückschluss auf den Fortschritt auf der Baustelle ermöglichen. Durch Vergleich gegen eine digitalisierte Baustellenplanung wird der aktuelle Baufortschritt überwacht und geprüft.

Das installierte Überwachungsmittel kann beispielsweise eine Kamera oder eine Scannereinrichtung sein, die an einer geeigneten Arbeitsmaschine der Baustelle installiert ist. Denkbar ist auch ein Einsatz einer Transponder/Transceiver-Technologie zur Überwachung, wobei die Arbeitsmaschine bzw. deren Bauteile und/oder Gebäudekomponenten mit entsprechenden Transponder bzw. Transceiver Modulen ausgestattet sind. Als geeignete Arbeitsmaschinen erweisen sich diejenigen Maschinen, die eine hochgelegene Montageposition erlauben, so dass das Überwachungsmittel einen guten Überblick über zumindest einen Teilbereich der Baustelle hat. Geeignet sind in diesem Fall insbesondere Baukrane, d.h. Turmkrane, die eine Installation des Überwachungsmittels in hoher Höhe, beispielsweise im Bereich der Turmspitze oder am Auslegersystem ermöglichen. Gerade die Schwenkbarkeit des Auslegersystems in hohen Höhen führt zu einem weitgehenden Beobachtungsradius.

Idealerweise kann eine Überwachung der Umgebung ohne Einschränkung des Baustellenbetriebes während der regulären Arbeitsweise der Arbeitsmaschine erfolgen. Das Überwachungsmittel generiert als Beobachtungsdaten solche Daten, die Einzelheiten der Umgebung der Arbeitsmaschine darstellen, beispielsweise eine oder mehrere andere Arbeitsmaschinen auf der Baustelle sowie deren Bewegungen, und/oder Baugewerke und deren Zustände und/oder anderweitige Objekte der Baustelle sowie Personen auf der Baustelle.

Die Übertragung der Beobachtungsdaten an wenigstens eine Recheneinheit erlaubt die anschließende Auswertung des aktuellen Baustellenzustands. Dieser Schritt muss nicht mehr manuell anhand von schriftlichen Unterlagen erfolgen, sondern kann voll- oder zumindest teilautomatisiert per Knopfdruck ausgeführt werden. Im einfachsten Fall erfolgt auf der Recheneinheit lediglich eine Wiedergabe der erfassten Beobachtungsdaten, beispielsweise als Bildinformation, so dass zumindest eine Fernprüfung des Baustellenzustandes durch einen zuständigen Fachmann möglich ist.

Die Beobachtungsdaten stellen eine zwei- oder dreidimensionale bildliche Darstellung der Maschinenumgebung bereit.

Für die Darstellung der Maschinenumgebung, die Modellierung von Gebäuden wird dabei auf eine Methode zur optimierten Planung, Ausführung und Bewirtschaftung von Gebäuden mit Hilfe von Software gesetzt. Bekannte Verfahren sind das "Building Information Modeling" (kurz: BIM; deutsch: Gebäudedatenmodellierung). Dabei werden alle relevanten Gebäudedaten digital erfasst, kombiniert und vernetzt. Das Gebäude kann als virtuelles Gebäudemodell auch geometrisch visualisiert werden (Computermodell).

Als Überwachungsmittel wird dazu beispielsweise ein Laserscanner mit dreidimensionaler Abtastung der Baustellenumgebung eingesetzt. Ebenso denkbar ist die alternative oder zusätzliche Verwendung von Radar und/oder einer Transceiver-Transponder-Lösung, wie RFID oder RuBee.

Denkbar ist es, dass die Recheneinheit entweder eine zentrale Recheneinheit ist oder Bestandteil der Maschinensteuerung der beobachtenden Arbeitsmaschine ist. Der Vorteil einer Auslagerung der Recheneinheit auf eine zentrale Recheneinheit besteht darin, dass diese verantwortlich für ein oder mehrere auf der Baustelle befindliche Arbeitsmaschinen bzw. Überwachungsmittel sein kann. Denkbar ist es, dass mehrere Arbeitsmaschinen mit entsprechenden Überwachungsmitteln ausgestattet sind, sodass die generierten Beobachtungsdaten unterschiedlicher Arbeitsmaschinen in der zentralen Recheneinheit zusammenführbar sind und gemeinsam ausgewertet werden können. Dadurch gibt sich eine optimierte Abdeckung der beobachtbaren Baustellenfläche. Die Anordnung von Überwachungsmitteln an anderweitigen Objekten, bspw. an Baugewerken selbst ist ebenso vorstellbar. Die Auswertung und Darstellung des aktuellen Baustellenzustands kann beispielsweise auf Benutzeranfrage oder zyklisch erfolgen.

Denkbar ist es ebenfalls, dass die zentrale Recheneinheit anhand der empfangenen Beobachtungsdaten eine Antikollisionsüberwachung ein oder mehrerer Arbeitsmaschinen ausführt. Durch die Beobachtungsdaten können gewisse Gefahrensituationen frühzeitig erkannt werden, gegebenenfalls durch Vorausberechnung vorhergesagt werden, und gegebenenfalls Warnhinweise an die jeweiligen Maschinensteuerungen der Arbeitsmaschine versendet werden. Denkbar ist selbstverständlich auch ein unmittelbarer Eingriff in die Steuerung der jeweiligen Arbeitsmaschinen durch die zentrale Recheneinheit.

Ist die Recheneinheit Bestandteil der Maschinensteuerung der beobachtenden Arbeitsmaschine, so können diese Beobachtungsdaten für die Ansteuerung der Maschinenaktoren unmittelbar Berücksichtigung finden. Dies ist insbesondere bei der Implementierung einer Antikollisionsüberwachung sinnvoll. Für die Implementierung der Recheneinheit kann auch ein verteiltes System aus lokaler Maschinensteuerung und zentraler Recheneinheit zum Einsatz kommen.

Die Ansteuerung der einen oder mehreren Arbeitsmaschinen über die Recheneinheit, entweder als Bestandteil der Maschinensteuerung oder als zentrale Recheneinheit, kann jedoch nicht nur zu Antikollisionszwecken zweckmäßig sein, sondern ebenfalls eine vollautomatisierte Abwicklung der Baustelle ermöglichen. Denkbar ist es beispielsweise, dass ein oder mehrere Arbeitsmaschinen auf der Baustelle vollautomatisch durch die zentrale Recheneinheit ferngesteuert werden und so der Fortschritt auf der Baustelle automatisiert geplant, überwacht und vollzogen werden kann.

Neben dem erfindungsgemäßen Verfahren wird die vorliegende Aufgabe ebenfalls durch eine Arbeitsmaschine, insbesondere einen Kran, mit wenigstens einem Überwachungsmittel zur Echtzeitüberwachung der Arbeitsmaschinenumgebung gelöst. Neben dem Überwachungsmittel stehen Kommunikationsmittel zur Verfügung, die eine Übertragung der generierten Beobachtungsdaten des Überwachungsmittels an eine zentrale Recheneinheit und / oder eine lokale Maschinensteuerung der Arbeitsmaschine ermöglichen. Eine derartige Arbeitsmaschine eignet sich für die Umsetzung des erfindungsgemäßen Verfahrens. Die Vorteile und Eigenschaften des erfindungsgemäßen Verfahrens treffen damit ohne Einschränkung auch auf die erfindungsgemäße Arbeitsmaschine zu.

Das Überwachungsmittel kann eine Laserscannereinrichtung, insbesondere einen 3D-Laserscanner, umfassen oder alternativ eine sonstige Kameraeinrichtung zur Erstellung bildlicher Beobachtungsdaten sein. Das eingesetzte Scannverfahren der Laserscannereinheit kann nach dem "Airborne Laserscanning" oder alternativ nach dem "terrestrischen Laserscanning" erfolgen. Die Anordnung der Laserscannereinheit erfolgt vorzugsweise an einem hochgelegenen Montagepunkt der Arbeitsmaschine. Bei einem Kran bietet sich in diesem Fall eine Anordnung im Bereich der Turmspitze bzw. des Kranauslegers oder auch an der Laufkatze bzw. dem Lasthaken an. Die Stromversorgung des Überwachungsmittels kann beispielsweise über die reguläre Stromversorgung einer Laufkatze erfolgen. Denkbar ist selbstverständlich die Integration einer separaten Stromversorgung bzw. einer Energieversorgung durch sonstige Verbraucher des Krans.

Neben der Scannereinheit kann das Überwachungsmittel zusätzlich wenigstens ein Radarmodul aufweisen, das aus einem Radarsender und Radarempfänger besteht. Das ergänzende Radarmodul erlaubt zusätzlich die Erfassung räumlicher Zusatzinformationen, beispielsweise lässt sich durch Abstandsmessungen ein dreidimensionales Modell der Umgebung darstellen, insbesondere in Verbindung mit den Daten des Laserscanners.

Denkbar ist es auch, dass das Überwachungsmittel alternativ oder zusätzlich eine Transponder/Transceiver-Lösung umfasst. Arbeitsmaschinen bzw. deren Komponenten sowie andere Baustellenobjekte oder Gebäudekomponenten können mit entsprechenden Transpondern ausgestattet sein, die durch ein Empfangsmodul des Überwachungsmittels erfassbar sind. Diese könnten ebenso wie die Laserscanner in die vorhandenen Überwachungsmittel eingebaut werden, oder auch zusätzlich angebracht sein.

Als Transponder/Transceiver-Lösung könnte ein RFID-System zum Einsatz kommen. Da RFID-Systeme den Nachteil haben, durch Metalle stark in ihrer Empfangsfähigkeit eingeschränkt zu werden, könnte auch alternativ oder zusätzlich die standardisierte LWID (Long Wave IDentfikation) Technologie, auch als RuBee-Technologie bekannt, zum Einsatz kommen, die ebenso ein 3-D-Erfassung der Arbeitsmaschinen, insbesondere Krane, Bauteile, bzw. aller Gebäudekomponenten, die mit derartigen Transceiver Modulen/Einheiten ausgestattet sind, ermöglicht. Die eingesetzten Einheiten können Objekte erfassen, speichern, und entsprechend in die BIM-Daten (3-D-Gebäudeinformationen) der Gebäudeplanung einfließen lassen.

Bei der Transpondertechnologie wird häufig RFID verwendet, allerdings hat diese Technologie im Umfeld von Metallen gravierende Nachteile. Wir würden in Zukunft gerne eine neue Technologie einsetzten, die sich LWID (Long Wave IDentfikation), bzw. RuBee nennt.

Neben der Arbeitsmaschine umfasst die Erfindung zudem ein System mit wenigstens einer derartigen Arbeitsmaschine gemäß der vorliegenden Erfindung. Das System eignet sich zur Durchführung des erfindungsgemäßen Verfahrens, weshalb sich das System durch dieselben Vorteile und Eigenschaften wie das Verfahren bzw. die Arbeitsmaschine auszeichnet. Eine wiederholende Beschreibung wird daher als nicht notwendig erachtet.

Weitere Vorteile und Eigenschaften der Erfindung sollen im Folgenden kurz umrissen werden.

Der wesentliche Kerngedanke der Erfindung besteht darin, in Zukunft Baustellen digital zu simulieren, vorzuplanen und zu überwachen und optional auch automatisiert zu betreiben. In diesem Zusammenhang sollen insbesondere Baukrane automatisiert oder zumindest teilautomatisiert ferngesteuert werden. Dazu müssen zukünftig Einrichtungen vorhanden sein, die den Baufortschritt dreidimensional in Echtzeit erfassen und kommunizieren können. Dies gilt als Grundvoraussetzung für die nachfolgende Automation des Baustellenbetriebs. Optional wird ein System gewünscht, das mögliche Kollisionen von einzelnen Baumaschinen auf der Baustelle effektiv verhindert und sogar im Voraus berechnen kann.

Für die Baustellenüberwachung sind aus diesem Grund Überwachungsmittel erforderlich, die an geeigneten Stellen der Baustelle zu platzieren sind, um eine möglichst gute Übersicht über den gesamten Ablauf auf der Baustelle erhalten zu können. Baukrane decken in der Regel alle Flächen der Baustelle ab und können so hindernisfrei Informationen zur Geometrie und Beschaffenheit aufzeichnen. Aus diesem Grund wird eine Laserscannereinrichtung an einem Baukran installiert, die systematisch die Baustelle auch während des regulären Baustellenbetriebes einscannt. Diese Information wird an die Betreiber der Baustelle übermittelt. So erhält der Betreiber regelmäßig oder auf Knopfdruck ein aktuelles Bild des Bauzustandes, ohne selbst auf der Baustelle vor Ort sein zu müssen.

Diese Datenübertragung kann entweder täglich erfolgen oder zyklisch in gewissen zeitlichen Abständen. Die Installation der Laserscannereinrichtung am Baukran erfolgt in Turmnähe bzw. am Auslegersystem. Die Laserscannereinrichtung kann am Auslegersystem oder unmittelbar an der Laufkatze bzw. auch am Lasthaken installiert sein. Für die Energieversorgung der Laserscannereinheit kann die Stromzuführung zur Laufkatze oder zum Lasthaken genutzt werden. Zusätzlich kann das Scannermodul über einen Radarsensor und -empfänger verfügen, um räumliche Zusatzinformationen zu gewinnen und dadurch gegebenenfalls Kollisionen zu vermeiden.

Die Beobachtungsdaten des Krans werden an eine zentrale Recheneinheit übermittelt, die die empfangenen Daten auswertet und darauf basierend eine Überwachung des Baustellenbetriebs ermöglicht. Neben der reinen Überwachung des Baustellenfortschritts kann ebenfalls eine Kollisionsüberwachung der einzelnen Arbeitsmaschinen erfolgen, die anhand des gelieferten Bildmaterials der Laserscannereinrichtung bzw. des Radarsystems arbeitet.

Denkbar ist ebenfalls eine Fernsteuerung der Arbeitsmaschinen, insbesondere der Baukrane durch die zentrale Recheneinheit anhand der gelieferten Beobachtungsdaten. Diese Vorgehensweise erlaubt einen vollautomatisierten Baustellenbetrieb.

Zu diesem Zweck kann es beispielsweise vorgesehen sein, wenn die zentrale Recheneinheit mit den einzelnen Maschinensteuerungen der Baukrane kommuniziert.

Weiter Vorteile und Eigenschaften der Erfindung werden im Folgenden anhand eines in den Figurendarstellungen gezeigten Ausführungsbeispiels näher erläutert.

Es zeigen:
- Figur 1:: eine Skizze eines Baustellenszenarios mit den erfindungsgemäßen Kranen in einer Draufsicht und
- Figur 2:: das Szenario gemäß Figur 1 in einer Seitendarstellung.

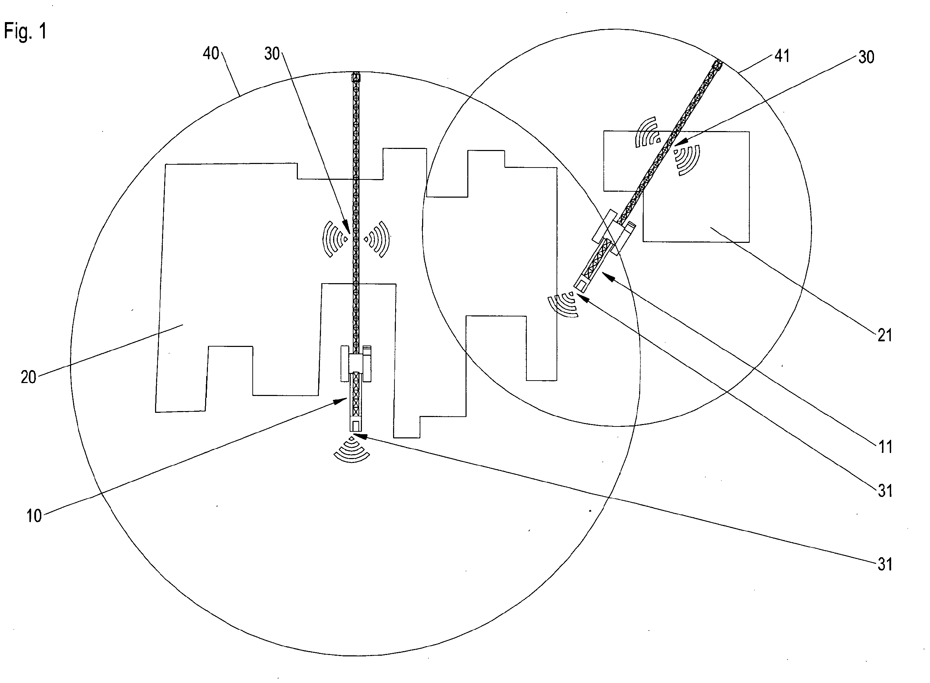

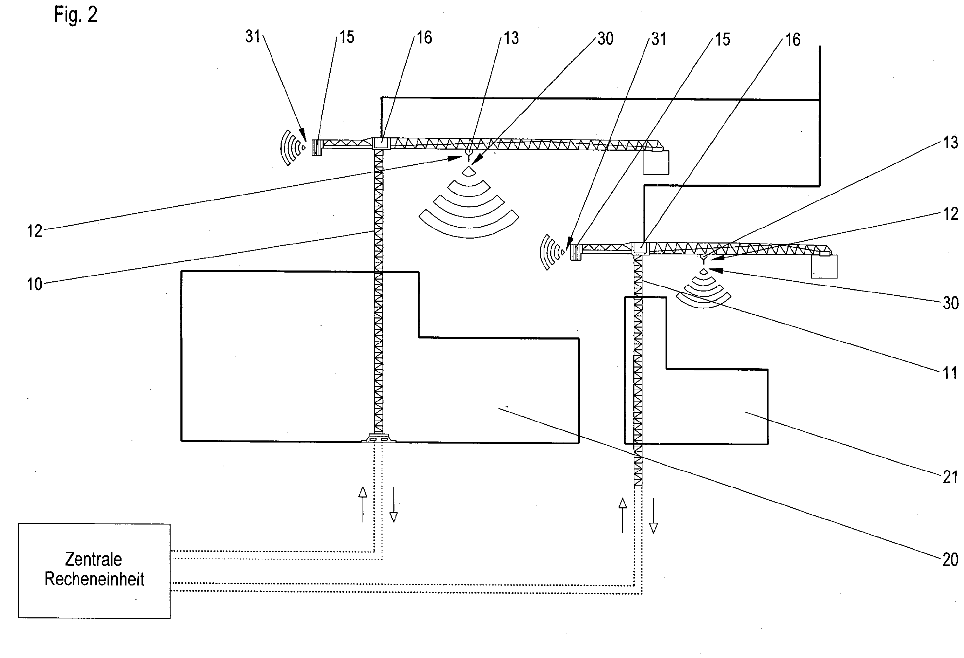

Die beiden Figuren 1, 2 skizzieren ein mögliches Baustellenszenario für den Einsatz des erfindungsgemäßen Systems. Dieses umfasst im gezeigten Ausführungsbeispiel zwei unabhängig voneinander arbeitende Baustellenkrane 10, 11, die jeweils als Turmdrehkrane ausgestaltet sind. Mit Hilfe der beiden Baukrane 10, 11 ist eine Baustellenüberwachung eingerichtet, die eine Überwachung des Fortschritts auf der Baustelle, beispielsweise eine Fortschrittsüberwachgung der exemplarisch eingezeichneten Gebäude 20, 21 erlaubt.

Zu diesem Zweck sind beide Krane mit geeigneten Überwachungsmitteln 30, 31 in Form von dreidimensionalen Laserscannern ausgestattet. Eine erste Sensorik 30 ist m Bereich des Lasthakens 12 befestigt. Die notwendige Stromversorgung der Sensorik 30 wird über die Stromzuführung der Laufkatze 13 bereitgestellt. In den Figurendarstellungen wird eine seitliche und nach unten gerichtete Erfassung des Sensors 30 angedeutet, die Erfindung soll jedoch nicht auf einen spezifischen Erfassungsbereich bzw. Erfassungswinkel beschränkt sein, allerdings ist der Baustellenbereich unterhalb und neben dem Kranausleger meist von Interesse.

Eine weitere Sensorik 31 ist bei beiden Kranen 10, 11 im Bereich des Auslegergegenballastes 15 montiert, der die Umgebung hinter dem Gegenballast abtastet. Auch hier gilt das zuvor gesagte, die 3D-Laserscannersensorik 31 ist nicht notwendigerweise auf einem bestimmten Erfassungsbereich eingeschränkt.

Beide Laserscannersensoren 30, 31 bewegen sich mit der Auslegerdrehbewegung mit, so dass während der Kranarbeit ein großer Bereich der Baustelle abgetastet werden kann. Figur 1 zeigt die Arbeitsradien 40, 41 der Kranausleger und verdeutlich das erfassbare Gebiet der integrierten Sensoriken 30, 31. Damit lässt sich im Laufe der Kranarbeiten bei entsprechender Kranbewegung ein vollständiges Bild der Baustelle generieren. In Kombination mit der Auslegerhöhe der Krane 10, 11 kann die gesamte Baustelle nahezu lückenlos erfasst werden.

Die beiden 3D-Laserscannersensoren 30, 31 kommunizieren mit ihrer jeweiligen Kransteuerung 16 der beiden Krane 10, 11 und übermitteln kontinuierlich oder auf Anfrage ihre Erfassungsdaten an die jeweilige Steuerung 16. Für die zentrale Baustellenüberwachung ist eine zentrale Recheneinheit 40 vorgesehen, die kommunikativ mit den beiden Kransteuerungen 16 zum Austausch der Sensorsignale der Sensoriken 30, 31 in Verbindung steht. Denkbar ist auch eine unmittelbare Verbindung der Recheneinheit 40 mit den jeweiligen Sensoriken 30, 31. Die Kommunikation zwischen der zentralen Recheneinheit 40 und den Kranen 10, 11 ist bidirektional ausgestaltet.

Durch die zentrale Recheneinheit 40 lässt sich anhand der Sensorsignale der aktuelle Zustand auf der Baustelle ermitteln. Die Sensoriken 30, 31 erfassen nicht nur die Gebäude 20, 21 bzw. deren Baufortschritt, sondern es besteht ebenfalls die Möglichkeit über die Sensoriken 30, 31 weitere Arbeitsmaschinen auf der Baustelle bzw. deren Bewegungen zu überwachen. Darauf aufbauend kann mithilfe der Sensordaten eine Kollisionsüberwachung umgesetzt werden, die mögliche Kollisionen zwischen den Kranen 10, 11 frühzeitig erkennt und gegebenenfalls Gegenmaßnahmen ergreift. Denkbar ist es beispielsweise in diesem Zusammenhang, dass die zentrale Einheit 40 unmittelbar Einfluss auf die jeweiligen Kransteuerungen 16 nimmt und Steuerungsbefehle zur Fernsteuerung der Krane 10, 11 an die Maschinen überträgt. Wird beispielsweise eine drohende Kollision zwischen beiden Maschinen 10, 11 durch die Recheneinheit 40 erkannt, wird ein entsprechendes Stoppsignal an einen oder beide Krane 10, 11 übertragen und ein sofortiger Maschinenstopp eingeleitet. Weiterhin können die beiden Kransteuerungen 16 auch miteinander zum gegenseitigen Informationsaustausch gekoppelt sein.

Die Auswertung der von der zentralen Recheneinheit 40 empfangenen Sensordaten kann entweder kontinuierlich oder bei Bedarf auf manuelle Benutzeranfrage erfolgen. Das erfindungsgemäße System schafft demnach Möglichkeiten, den aktuellen Zustand der Baustelle laufend auch im Betrieb elektronisch zu überwachen. Besonders vorteilhaft ist dabei, dass die Überwachung nicht Vorort stattfinden muss, sondern durch die Recheneinheit 40 auch per Fernzugang von einem beliebigen Ort, wie der Zentrale des Bauleiters, vorgenommen werden kann.

## Patentansprüche

1. Verfahren zur Echtzeitüberwachung des aktuellen Zustands einer Baustelle mit ein oder mehreren Arbeitsmaschinen (10, 11), wobei
ein an wenigstens einer Arbeitsmaschine (10, 11) installiertes Überwachungsmittel (30, 31) die Umgebung der Arbeitsmaschine (10, 11) in Echtzeit beobachtet und entsprechende Beobachtungsdaten generiert, und die generierten Beobachtungsdaten von dem Überwachungsmittel (30, 31) an eine Recheneinheit (40) zur Echtzeitauswertung des aktuellen Baustellenzustandes übertragen werden,
das Überwachungsmittel (30, 31) Gebäude (20, 21) in der Maschinenumgebung erfasst und beobachtet,
die Recheneinheit (40) anhand der gesammelten Beobachtungsdaten einen aktuellen Baufortschritt der Gebäude (20, 21) gemäß einer Bauplanung auswertet, indem die gesammelten Beobachtungsdaten mit einer digitalisierten Baustellenplanung verglichen werden, und
die Beobachtungsdaten eine 2- oder 3-dimensionale bildliche Darstellung der Maschinenumgebung umfassen, wobei die erfassten Gebäude (20, 21) mittels einer Building-Information-Modeling-Software (BIM) modelliert werden.

2. Verfahren gemäß Anspruch 1, **dadurch gekennzeichnet, dass** die Recheneinheit (40) eine zentrale Recheneinheit (40) ist, die Beobachtungsdaten von ein oder mehreren auf der Baustelle befindlichen Arbeitsmaschinen (10, 11) empfängt, diese auswertet und optional den aktuellen Baustellenzustand darstellt, vorzugsweise in Reaktion auf eine manuelle Benutzeranfrage oder automatisch in zyklischen Abständen.

3. Verfahren nach einem der vorhergehenden Ansprüche, **dadurch gekennzeichnet, dass** das Überwachungsmittel (30, 31) weiterhin Baustellenobjekte, Personen und/oder andere Arbeitsmaschinen (10, 11) in der Maschinenumgebung erfasst und beobachte und die Recheneinheit (40) anhand der empfangenen Beobachtungsdaten eine Antikollisionsüberwachung zwischen ein oder mehreren Arbeitsmaschinen (10, 11) und Baustellenobjekten und/oder weiteren auf der Baustelle stationierten Arbeitsmaschinen (10, 11) ausführt.

4. Verfahren nach einem der vorhergehenden Ansprüche, **dadurch gekennzeichnet, dass** die Recheneinheit (40) Bestandteil der Maschinensteuerung der beobachtenden Arbeitsmaschine (10, 11) ist, wobei die Maschinensteuerung zugeführte Beobachtungsdaten für die Ansteuerung der ein oder mehreren Maschinenaktoren berücksichtigt werden.

5. Verfahren nach einem der vorhergehenden Ansprüche, **dadurch gekennzeichnet, dass** die Recheneinheit (40) eine zentrale Recheneinheit (40) ist und die Beobachtungsdaten der wenigstens einen Arbeitsmaschine (10, 11) zur Fernsteuerung ein oder mehrere Arbeitsmaschinen (10, 11) auf der Baustelle dienen.

6. System zur Durchführung des Verfahrens gemäß einem der Ansprüche 1 bis 5 umfassend eine zentrale Recheneinheit (40) und wenigstens eine Arbeitsmaschine (10, 11), wobei die Arbeitsmaschine (10, 11) wenigstens ein Überwachungsmittel (30, 31) zur Echtzeitüberwachung der Arbeitsmaschinenumgebung sowie ein Kommunikationsmittel zur Übertragung der generierten Beobachtungsdaten an die zentrale Recheneinheit (40) umfasst.

7. System nach Anspruch 6, wobei das Überwachungsmittel (30, 31) eine Laserscannereinrichtung, insbesondere einen 3D-Laserscanner umfasst, und/oder eine Transceiver/Transponder-Technologie, wie vorzugsweise RFID und/oder RuBee.

8. System nach einem der Ansprüche 6 oder 7, **dadurch gekennzeichnet, dass** das Überwachungsmittel (30, 31) am Ausleger der Arbeitsmaschine (10, 11) angeordnet ist, wobei die Stromversorgung des Überwachungsmittel (30, 31) vorzugsweise über eine bestehende Energieversorgung des Auslegers, beispielsweise der Stromzuführung einer Laufkatze bereitgestellt ist.

9. System nach einem der Ansprüche 6 bis 8, wobei das Überwachungsmittel (30, 31) zusätzlich ein Radarmodul bestehend aus Radarsender und -empfänger für die Erfassung räumlicher Zusatzinformationen umfasst.

## Claims

1. Method for real time monitoring of the current status of a construction site that includes one or more work machines (10, 11), wherein
a monitoring means (30, 31) installed on at least one work machine (10, 11) monitors the environment of the work machine (10, 11) in real time and generates corresponding monitoring data, and
the generated monitoring data are transmitted by the monitoring means (30, 31) to a processing unit (40) for real time evaluation of the current construction site status,
the monitoring means (30, 31) detects and monitors buildings (20, 21) in the machine environment,
the processing unit (40) evaluates the current construction progress of the buildings (20, 21) in accordance with a construction schedule by comparing the collected monitoring data with a digital construction site schedule, and
the monitoring data comprise a two-dimensional or three-dimensional visual representation of the machine environment, wherein the detected buildings (20, 21) are modeled using a Building-Information-Modeling Software (BIM).

2. Method in accordance with Claim 1, **characterized in that** the processing unit (40) is a central processing unit (40) that receives monitoring data from one or more work machines (10, 11) located on the construction site, evaluates them, and optionally represents the current construction site status, preferably in response to a manual user query or automatically at cyclic intervals.

3. Method in accordance with one of the preceding claims, **characterized in that** the monitoring means (30, 31) further detect(s) and monitor(s) construction equipment and/or construction site objects and/or persons and/or other work machines (10,11) in the machine environment, and the processing unit (40) performs anti-collision monitoring between one or more work machines (10, 11) and construction site objects and/or further work machines (10, 11) stationed on the construction site using the received monitoring data.

4. Method in accordance with one of the preceding claims, **characterized in that** the processing unit (40) is a component of the machine control of the monitoring work machine (10, 11), with the machine control taking account of supplied monitoring data for the control of the one or more machine actuators.

5. Method in accordance with one of the preceding claims, **characterized in that** the processing unit (40) is a central processing unit (40) and the monitoring data of the at least one work machine (10, 11) serve the remote control of one or more work machines (10, 11) on the construction site.

6. System for performing the method in accordance with one of claims 1 to 5, comprising a central processing unit (40) and at least one work machine (10, 11), wherein the work machine (10, 11) has at least one monitoring means (30, 31) for real time monitoring of the work machine environment and has a communication means for transmitting the generated monitoring data to the central processing unit (40).

7. System in accordance with Claim 6, wherein the monitoring means (30, 31) comprises a laser scanner device, in particular a 3D laser scanner, and/or a transceiver/transponder technology such as preferably RFID and/or RuBee.

8. System in accordance with one of the claims 6 or 7, **characterized in that** the monitoring means (30, 31) is arranged at the boom of the work machine (10, 11), with the power supply of the monitoring means (30, 31) preferably being provided via an existing energy supply of the boom, for example the power supply of a trolley.

9. System in accordance with one of the claims 6 to 8, wherein the monitoring means (30, 31) additionally comprises a radar module consisting of a radar sensor and a radar receiver for the detection of additional spatial information.

## Revendications

1. Procédé de surveillance en temps réel de l'état actuel d'un chantier avec une ou plusieurs machines de travail (10, 11),
un moyen de surveillance (30, 31) installé sur au moins une machine de travail (10, 11) observant en temps réel l'environnement de la machine de travail (10, 11) et générant des données d'observation correspondantes, et
les données d'observation générées étant transmises par le moyen de surveillance (30, 31) à une unité de calcul (40) pour l'évaluation en temps réel de l'état actuel du chantier,
le moyen de surveillance (30, 31) détectant et observant des bâtiments (20, 21) dans l'environnement de la machine,
l'unité de calcul (40) évaluant, à l'aide des données d'observation collectées, un état d'avancement actuel de la construction des bâtiments (20, 21) conformément à un planning de construction, en comparant les données d'observation collectées à un planning de chantier numérisé, et
les données d'observation comprenant une représentation imagée bidimensionnelle ou tridimensionnelle de l'environnement de la machine, les bâtiments détectés (20, 21) étant modélisés au moyen d'un logiciel de modélisation des informations du bâtiment (BIM).

2. Procédé selon la revendication 1, **caractérisé en ce que** l'unité de calcul (40) est une unité de calcul centrale (40) qui reçoit des données d'observation d'une ou plusieurs machines de travail (10, 11) se trouvant sur le chantier, les évalue et, en option, représente l'état actuel du chantier, de préférence en réponse à une demande manuelle de l'utilisateur ou automatiquement à intervalles cycliques.

3. Procédé selon l'une quelconque des revendications précédentes, **caractérisé en ce que** le moyen de surveillance (30, 31) détecte et observe en outre des objets de chantier, des personnes et/ou d'autres machines de travail (10, 11) dans l'environnement de la machine, et l'unité de calcul (40) effectue une surveillance anticollision entre une ou plusieurs machines de travail (10, 11) et des objets de chantier et/ou d'autres machines de travail (10, 11) stationnées sur le chantier à l'aide des données d'observation reçues.

4. Procédé selon l'une quelconque des revendications précédentes, **caractérisé en ce que** l'unité de calcul (40) fait partie de la commande de machine de la machine de travail (10, 11) qui observe, les données d'observation amenées à la commande de machine étant prises en compte pour la commande des un ou plusieurs actionneurs de la machine.

5. Procédé selon l'une quelconque des revendications précédentes, **caractérisé en ce que** l'unité de calcul (40) est une unité de calcul centrale (40) et les données d'observation de l'au moins une machine de travail (10, 11) servent à la commande à distance d'une ou plusieurs machines de travail (10, 11) sur le chantier.

6. Système pour la mise en oeuvre du procédé selon l'une quelconque des revendications 1 à 5, comprenant une unité de calcul centrale (40) et au moins une machine de travail (10, 11), la machine de travail (10, 11) comprenant au moins un moyen de surveillance (30, 31) pour surveiller en temps réel l'environnement de la machine de travail ainsi qu'un moyen de communication pour transmettre les données d'observation générées à l'unité de calcul centrale (40).

7. Système selon la revendication 6, dans lequel le moyen de surveillance (30, 31) comprend un dispositif de balayage laser, notamment un scanner laser 3D, et/ou une technologie d'émetteur-récepteur/transpondeur, comme de préférence RFID et/ou RuBee.

8. Système selon l'une quelconque des revendications 6 ou 7, **caractérisé en ce que** le moyen de surveillance (30, 31) est agencé sur la flèche de la machine de travail (10, 11), l'alimentation en courant électrique du moyen de surveillance (30, 31) étant de préférence fournie par une alimentation en énergie existante de la flèche, par exemple l'amenée de courant électrique d'un chariot roulant.

9. Système selon l'une quelconque des revendications 6 à 8, dans lequel le moyen de surveillance (30, 31) comprend en outre un module radar constitué d'un émetteur et d'un récepteur radar pour l'acquisition d'informations spatiales supplémentaires.
